# FASCICULE DE BREVET EUROPEEN

(11) **EP 3 380 882 B1**
(45) Date de publication et mention de la délivrance du brevet: **13.03.2024**
(21) Numéro de dépôt: 16800970.2
(22) Date de dépôt: 23.11.2016
(51) Int. Cl.: G02B 27/01

(54) **DISPOSITIF D'AFFICHAGE TÊTE-HAUTE POUR UN VÉHICULE ET VÉHICULE ÉQUIPÉ D'UN TEL DISPOSITIF**
HEADUP-ANZEIGE FÜR EIN FAHRZEUG UND FAHRZEUG MIT SOLCH EINER VORRICHTUNG
HEAD-UP DISPLAY FOR A VEHICLE AND VEHICLE EQUIPPED WITH SUCH A DEVICE

(30) Priorité: 23.11.2015 FR 1561257
(43) Date de publication de la demande: 03.10.2018
(73) Titulaire: Valeo Comfort and Driving Assistance, 94000 Créteil (FR)
(72) Inventeur: GRANDCLERC, François, 94046 Créteil Cedex (FR); MERMILLOD, Pierre, 94046 Créteil Cedex (FR)
(74) Mandataire: Delplanque, Arnaud
(86) Numéro de dépôt international: PCT/EP2016/078583
(87) Numéro de publication internationale: WO 2017/089415

(56) Documents cités:
- EP-A1- 2 618 202
- WO-A1-2014/102462

## Description

### DOMAINE TECHNIQUE AUQUEL SE RAPPORTE L'INVENTION

La présente invention concerne de manière générale le domaine des systèmes d'aide à la conduite pour véhicules.

Elle concerne plus particulièrement un dispositif d'affichage tête-haute pour un véhicule.

Elle concerne également un véhicule équipé d'un tel dispositif d'affichage tête-haute.

### ARRIERE-PLAN TECHNOLOGIQUE

On connaît de l'art antérieur des dispositifs d'affichage tête-haute pour véhicule comportant :
- une unité de génération d'images générant un faisceau lumineux primaire représentant une scène à afficher, et
- un système optique de projection de ladite scène à un individu situé à l'intérieur dudit véhicule, ledit système optique de projection comprenant un miroir de renvoi ayant une première face et une deuxième face, ladite première face étant tournée vers ladite unité de génération d'images pour réfléchir ledit faisceau lumineux primaire vers un combineur adapté à former une image de ladite scène visible par ledit individu.

Ces dispositifs d'affichage tête-haute s'avèrent utiles pour aider à la conduite le conducteur d'un véhicule. Ils permettent notamment de projeter, dans le champ de vision du conducteur, et en superposition de sa vision de la route sur laquelle il circule des informations relatives à la sécurité, à l'environnement du véhicule ou bien à la navigation.

Les unités de génération d'images utilisées dans ces dispositifs sont des systèmes électroniques complexes qui peuvent présenter des défaillances de sorte que des informations relatives à la sécurité (anomalie détectée sur le véhicule, collision avec un autre véhicule) peuvent ne plus être affichées lorsqu'un danger imminent survient.

### OBJET DE L'INVENTION

Afin de remédier à l'inconvénient précité de l'état de la technique, la présente invention propose un dispositif d'affichage permettant d'afficher à un individu situé à l'intérieur du véhicule une image supplémentaire sans passer par l'unité de génération d'images.

Plus particulièrement, on propose selon l'invention un dispositif d'affichage tête-haute, tel que défini en introduction, qui comporte au moins un élément faisant face à ladite deuxième face du miroir de renvoi et adapté à émettre un faisceau lumineux secondaire en direction de ladite deuxième face, ledit faisceau lumineux secondaire étant transmis au travers dudit miroir de renvoi vers ledit combineur formant une image dudit élément visible par ledit individu, et dans lequel ledit élément (18) comprend un motif lumineux formant témoin d'alarme, d'alerte ou de signalisation.

Ainsi, grâce au dispositif d'affichage tête-haute de l'invention, même si l'unité de génération d'images présente une défaillance, il est toujours possible *via* l'élément émettant le faisceau lumineux secondaire de projeter au travers du système optique de projection des informations importantes dans le champ de vision de l'individu.

D'autres caractéristiques non limitatives et avantageuses du dispositif d'affichage tête-haute conforme à l'invention, prises individuellement ou selon toutes les combinaisons techniquement possibles, sont les suivantes :
- ledit élément comprend une source lumineuse électroluminescente ;
- ladite source lumineuse est une diode électroluminescente organique ;
- l'intensité et/ou le spectre du faisceau lumineux secondaire émis par ledit élément sont modulés au cours du temps ;
- ledit élément occupe une position prédéterminée par rapport audit miroir de renvoi de sorte que ladite image de l'élément est visible par l'individu dans une direction privilégiée dans laquelle il voit une partie centrale de ladite image de la scène projetée par le système optique de projection ;
- le dispositif d'affichage tête-haute comporte un système optique interposé entre ledit miroir de renvoi et ledit élément et destiné à former une image intermédiaire dudit élément ;
- ledit combineur formant ladite image de la scène à une première distance-image de l'individu, ledit système optique présente des propriétés optiques et une position relative par rapport audit élément et audit miroir de renvoi qui sont déterminées de sorte que le combineur forme ladite image de l'élément à une deuxième distance-image de l'individu sensiblement égale à ladite première distance-image ;
- ledit miroir de renvoi présente, pour ledit faisceau lumineux secondaire, un coefficient de transmission entre sa deuxième face et sa première face supérieur ou égal à 10 % ;
- ledit combineur présente, pour ledit faisceau lumineux secondaire, un coefficient de réflexion supérieur ou égal à 20 % ;
- ladite unité de génération d'images comprend un écran lumineux actif.

L'invention propose également un véhicule équipé d'un dispositif d'affichage tête-haute conforme à l'invention.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue d'ensemble en coupe partielle d'un véhicule automobile comportant un dispositif d'affichage tête-haute selon un mode de réalisation préféré de l'invention ;
- la figure 2 est un exemple d'élément lumineux pouvant être intégré au dispositif de la figure 1 et représentant un témoin d'alarme ;
- la figure 3 est une vue partielle d'une variante de réalisation d'un dispositif d'affichage tête-haute comportant une lentille interposée entre le miroir de renvoi et l'élément lumineux formant témoin d'alarme.

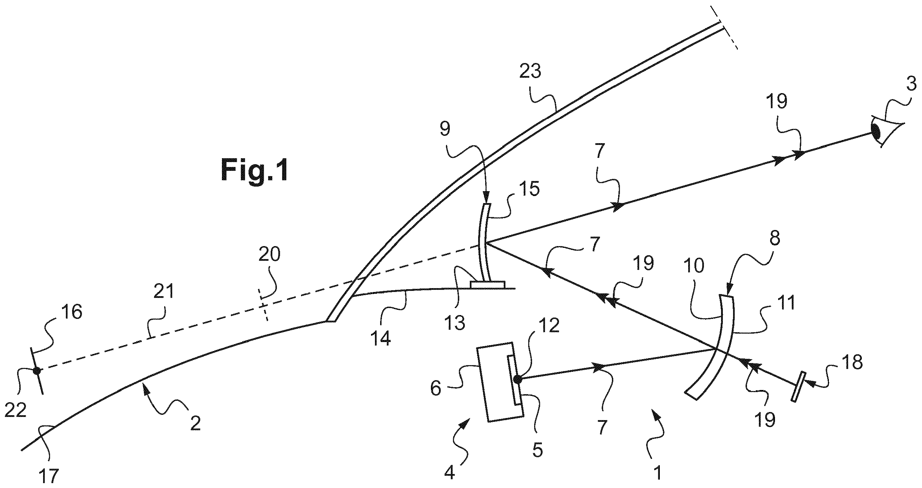

Sur la figure 1, on a représenté dispositif d'affichage tête-haute 1, ci-après dénommé « *afficheur tête-haute »* ou plus simplement afficheur, équipant un véhicule, ici un véhicule automobile 2.

De manière générale, cet afficheur 1 est destiné à projeter des images dans le champ de vision d'un individu 3 situé à l'intérieur du véhicule 2 (on a représenté sur la figure 1 que l'un des yeux de l'individu 3). On considérera dans la suite de la description que cet individu 3 est le conducteur du véhicule automobile 2.

Ces images peuvent comprendre par exemple des informations relatives au véhicule 2 (vitesse, régime moteur, niveau d'essence, distance par rapport aux autres véhicules, etc...) ou encore des instructions quant à l'itinéraire à suivre par le véhicule 2 (en association avec un système de navigation embarquée par exemple).

Pour projeter ces images, l'afficheur 1 comporte tout d'abord une unité de génération d'images 4 comprenant de préférence un écran 5 lumineux actif, qui est ici monté dans un boîtier 6 formant support pour l'écran 5.

L'écran 5 est ici un écran à cristaux liquides (écran dit « LCD » selon l'acronyme anglais de « *Liquid Crystal Display* ») à transistors en couche mince (ou « TFT » pour « *Thin-Film Transistor »*).

Le boîtier 6 contient un contrôleur de commande (non représentée) de l'écran 5 qui reçoit des signaux en provenance de l'ordinateur de bord du véhicule 2 et qui pilote en conséquence l'écran 5 pour afficher une scène sur celui-ci.

En d'autres termes, lorsque l'écran 5 est piloté par le contrôleur de commande, l'unité de génération d'images 4 génère un faisceau lumineux primaire 7 (seul un rayon lumineux primaire partant du centre 12 de l'écran 5 est représenté sur la figure 1) représentant cette scène à projeter dans le champ de vision du conducteur 3.

À cet effet, l'afficheur 1 comporte également un système optique de projection de la scène au conducteur 3 situé à l'intérieur du véhicule 2.

Ce système optique de projection comprend notamment un miroir de renvoi 8 et un combineur 9.

Le miroir de renvoi 8 est ici un miroir sphérique présentant une première face 10 et une deuxième face 11.

En variante, le miroir de renvoi peut être un miroir plan ou bien un miroir de forme parabolique, elliptique ou asphérique.

Comme représenté sur la figure 1, la première face 10 est celle qui est tournée vers l'unité de génération d'images 4, et plus précisément vers l'écran 5 de manière à intercepter le faisceau lumineux primaire 7 généré par l'affichage de la scène sur l'écran 5.

La première face 10 du miroir de renvoi 8 comprend de préférence un revêtement optique adapté à réfléchir le faisceau lumineux primaire 7 vers le combineur 9. Ce revêtement optique peut par exemple comprendre une couche métallique ou bien un empilement de couches diélectriques dont les propriétés optiques (nombre de couches, indices et épaisseurs des couches) sont optimisées pour la réflexion du faisceau lumineux primaire 7.

Dans le mode de réalisation particulier illustré sur la figure 1, le combineur 9 est disposé entre le pare-brise 23 du véhicule 2 et les yeux du conducteur 3 et est monté sur un socle 13 placé dans une planche de bord 14 du véhicule 2.

Avantageusement, on pourrait prévoir entre le combineur et le socle, des moyens de réglage du combineur permettant de modifier sa position et/ou son orientation par rapport à la planche de bord.

Le combineur 9 comprend une face avant 15 tournée vers l'intérieur de l'habitacle du véhicule 2, c'est-à-dire vers le conducteur 3. Cette face avant 15 fait face, au moins partiellement, à la première face 10 du miroir de renvoi 8 de manière à intercepter le faisceau lumineux primaire 7 réfléchi par le miroir de renvoi 8.

La face avant 15 du combineur 9 comprend de préférence un revêtement partiellement réfléchissant (non représenté), par exemple avec un coefficient moyen de réflexion compris entre 20 % et 35 %.

Grâce à ce revêtement réfléchissant, la face avant 15 du combineur 9 réfléchit le faisceau lumineux primaire 7 en direction du conducteur 3 et forme une image 16 de la scène générée par l'écran 5 qui est visible par le conducteur 3.

En variante, la face avant du combineur peut être nue, c'est-à-dire sans revêtement réfléchissant. On utilise alors les propriétés de réflexion de la surface nue pour réfléchir le faisceau lumineux primaire. Dans ce cas, le coefficient moyen de réflexion sur la face avant du combineur peut être inférieur à 20%.

De manière avantageuse, l'écran 5, le miroir de renvoi 8 et le combineur 9 sont agencés les uns par rapport aux autres pour que l'afficheur 1 projette l'image 16 de la scène dans le champ de vision du conducteur 3 mais à l'extérieur du véhicule 2, ici au niveau de l'avant du capot 17 du véhicule 2.

Cette image 16 de la scène est formée à une première distance-image du conducteur 3 qui est généralement comprise entre 1,8 et 2,5 mètres.

Plus précisément, l'image 16 de la scène est projetée par le système optique de projection dans une direction privilégiée 21 (voir figure 1) dans laquelle le conducteur 3 voit une partie centrale de cette image 16. Cette direction privilégiée 21 associée à la partie centrale de l'image 16 de la scène correspond à la direction de regard du conducteur 3 lorsque celui-ci regarde le point-image 22 correspondant à l'image du centre 12 de l'écran 5 par le système optique de projection.

Comme le combineur 9 est partiellement transparent, l'image 16 de la scène est visible par le conducteur 3 sans que celui-ci n'ait à détourner de manière trop importante le regard de la route lorsqu'il est en situation de conduite.

Afin de pouvoir afficher dans le champ de vision du conducteur 3 une autre image que l'image 16 de la scène issue de l'unité de génération d'images 4, l'afficheur 1 comporte selon l'invention (voir figure 1) un élément 18 faisant face à la deuxième face 11 du miroir de renvoi 8 qui est adapté à émettre un faisceau lumineux secondaire 19 en direction de cette deuxième face 11, le faisceau lumineux secondaire 19 étant transmis au travers du miroir de renvoi 8 vers le combineur 9 formant une image 20 de cet élément 18 qui est visible par le conducteur 3.

Ainsi, même si l'unité de génération d'images 4 est défaillante ou ne fonctionne plus, l'afficheur 1 est en mesure d'afficher malgré tout une autre image, l'image 20 de l'élément 18, dans le champ de vision du conducteur 3.

Afin d'atteindre une visibilité suffisante de l'image 20 de l'élément 18 pour le conducteur 3, le miroir de renvoi 8 renvoi présente, pour le faisceau lumineux secondaire 19, un coefficient de transmission entre sa deuxième face 11 et sa première face 10 supérieur à un coefficient de transmission minimal prédéterminé. De préférence, le coefficient de transmission du miroir de renvoi 8 est supérieur ou égal à 10 %.

De même, le combineur présente, pour le faisceau lumineux secondaire 19, un coefficient de réflexion sur sa face avant 15 qui est supérieur à un coefficient de réflexion minimal prédéterminé. De préférence, le coefficient de réflexion sur la face avant 15 du combineur 9 est supérieur ou égal à 20 %.

L'élément 18 comprend un motif ou voyant lumineux formant témoin d'alarme, d'alerte ou de signalisation.

Les témoins d'alerte peuvent par exemple signaler au conducteur 3 une panne moteur imposant un arrêt immédiat ou un danger pour les passagers du véhicule 2 (surchauffe moteur, défaillance du système de freinage, ceintures de sécurité non bouclées, ...).

Les témoins d'avertissement peuvent par exemple signaler au conducteur 3 la panne d'un système électronique de bord ou le besoin de faire réviser rapidement un organe du véhicule, tout en laissant la possibilité de continuer à utiliser le véhicule (défaillance du système d'airbags, niveau de carburant faible, dysfonctionnement du système d'antiblocage des roues, ...).

Les témoins de signalisation signalent le fonctionnement ou l'activation d'un système de bord (feux allumés, frein de parking serré, essuie-glaces activés, ...).

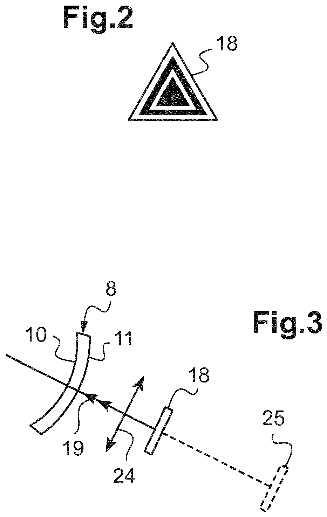

Un exemple de motif lumineux possible est représenté sur la figure 2. Ce motif lumineux 18 représente un témoin d'alarme indiquant au conducteur 3 du véhicule qu'un danger est imminent. D'autres motifs lumineux sont possibles.

Avantageusement, l'élément 18 est piloté de sorte que l'intensité ou le spectre du faisceau lumineux secondaire 19 émis par l'élément 18 sont modulés au cours du temps. Ceci permet par exemple de faire varier la couleur de l'image 20 de l'élément 18 vu par le conducteur 3 en fonction de l'imminence d'un danger. Par exemple, on peut afficher le motif lumineux en jaune lorsqu'il reste 50 kilomètres d'autonomie en carburant, en orange lorsqu'il reste 20 km, et en rouge lorsqu'il reste 10 km.

On peut également envisager de faire clignoter le motif lumineux pour attirer l'attention du conducteur 3 sur l'image 20 de l'élément.

Dans le mode de réalisation préféré représenté sur la figure 1, l'élément 18 comprend une source lumineuse électroluminescente, du type diode électroluminescente organique (ou « OLED » pour *« Organic Light-Emitting Diode »* en anglais). Ce type de source lumineuse peut être alimenté directement en courant continu à partir de la batterie (avec éventuellement un circuit abaisseur de tension) et présente les avantages de consommer peu de puissance et d'avoir une durée de vie très élevée, typiquement d'au moins dix mille heures.

De plus, l'élément 18 à base d'OLED peut être aisément défini à la forme du motif lumineux à afficher.

Comme représenté sur la figure 1, l'élément 18 est disposé par rapport au miroir de renvoi 8 de sorte que l'image 20 de l'élément 18 est visible par le conducteur 3 dans la direction privilégiée 21 associée à la partie centrale (voir point-image 22) de l'image 16 de la scène projetée par le système optique de projection. De cette façon, on s'assure que l'image 20 de l'élément 18 est bien visible lorsqu'il émet le faisceau lumineux secondaire 19.

Dans la pratique, pour des raisons d'encombrement global de l'afficheur 1 dans l'habitacle du véhicule 2, la distance entre l'élément 18 et la deuxième face 11 (face arrière) du miroir de renvoi 8 est différente, généralement inférieure, de la distance séparant l'écran 5 de la première face 10 (face avant) du miroir de renvoi 8.

En d'autres termes, l'élément 18 occupe une position par rapport au miroir de renvoi 8 qui est telle que le combineur 9 forme l'image 20 de l'élément 18 à une deuxième distance-image du conducteur 3 qui est inférieure à la première distance-image de l'image 16 de la scène.

Dans ce cas, l'image 20 de l'élément 18 apparaîtra légèrement floue pour le conducteur 3 regardant l'image 16 de la scène.

Avantageusement, comme le montre la figure 3, l'afficheur 1 peut alors comprendre un système optique 24 interposé entre le miroir de renvoi 8 et l'élément 18 et destiné à former une image intermédiaire 25 de l'élément 18.

De préférence, ce système optique 24 présente des propriétés optiques et une position relative par rapport à l'élément 18 et au miroir de renvoi 8 qui sont déterminées de sorte que le combineur (9) forme ladite image (20) de l'élément (18) à une deuxième distance-image de l'individu (3) sensiblement égale à ladite première distance-image.

En d'autres termes, le système optique 24 est déterminé de sorte que le combineur (9) forme ladite image (20) de l'élément (18) dans un plan image sensiblement confondu avec le plan image de l'image 16 de la scène.

La distance entre l'image intermédiaire 25 et le miroir de renvoi 8 est alors sensiblement égale à la distance entre l'écran 5 et le miroir de renvoi 8.

Dans l'exemple représenté ici sur la figure 3, le système optique 24 comprend une simple lentille convergente placée à une distance de l'élément 18 inférieure à sa distance focale. L'image intermédiaire 25 de l'élément 18 se forme donc derrière l'élément 18, c'est-à-dire à une distance plus élevée su miroir de renvoi 8.

L'image intermédiaire 25 est ensuite projetée par le miroir de renvoi 8 (fonctionnant en transmission) et le combineur 9 dans un plan image sensiblement confondu avec le plan image de l'image 16 de la scène. De cette façon, le conducteur 3 voit simultanément nettes à la fois l'image 16 de la scène et l'image 20 de l'élément 18.

On peut également prévoir que l'élément 18 de l'afficheur 1 présente une forme non plane déterminée de manière à corriger les aberrations optiques dans l'image 20 de l'élément 18. Ceci peut être facilement réalisé lorsque l'élément 18 comprend une source lumineuse de type OLED en déformant le substrat de la diode.

La présente invention n'est nullement limitée au mode de réalisation décrit et représenté, mais l'homme du métier saura y apporter toute variante conforme à son esprit.

On pourrait ainsi utiliser à la place du miroir de repliement un système optique plus complexe comprenant plusieurs miroirs et/ou d'autres éléments optiques.

On pourrait également prévoir que le combineur soit formé par le pare-brise du véhicule. Dans ce cas, les deux feuilles de verre formant ledit pare-brise peuvent être avantageusement feuilletées avec un intercalaire de feuilletage de forme prismatique ou en coin (« *wedge »* en anglais). Ceci permet d'éviter le phénomène parasite de « double image » résultant de la réflexion des faisceaux lumineux sur les deux feuilles de verre en direction du conducteur.

Dans un autre mode de réalisation, l'élément pourrait comprendre une source lumineuse de type OLED déposée sur la face arrière du miroir de renvoi.

## Revendications

1. Dispositif d'affichage tête-haute (1) pour un véhicule (2) comportant :
- une unité de génération d'images (4) générant un faisceau lumineux primaire (7) représentant une scène à afficher, et
- un système optique de projection (8, 9) de ladite scène à un individu (3) situé à l'intérieur dudit véhicule (2), ledit système optique de projection (8, 9) comprenant un miroir de renvoi (8) ayant une première face (10) et une deuxième face (11), ladite première face (10) étant tournée vers ladite unité de génération d'images (4) pour réfléchir ledit faisceau lumineux primaire (7) vers un combineur (9) adapté à former une image (16) de ladite scène visible par ledit individu (3),
**caractérisé en ce qu'**il comporte au moins un élément (18) faisant face à ladite deuxième face (11) du miroir de renvoi (8) et adapté à émettre un faisceau lumineux secondaire (19) en direction de ladite deuxième face (11), ledit faisceau lumineux secondaire (19) étant transmis au travers dudit miroir de renvoi (8) vers ledit combineur (9) formant une image (20) dudit élément (18) visible par ledit individu (3), et dans lequel ledit élément (18) comprend un motif lumineux formant témoin d'alarme, d'alerte ou de signalisation.

2. Dispositif d'affichage tête-haute (1) selon la revendication 1, dans lequel ledit élément (18) comprend une source lumineuse électroluminescente.

3. Dispositif d'affichage tête-haute (1) selon la revendication 2, dans lequel ladite source lumineuse est une diode électroluminescente organique.

4. Dispositif d'affichage tête-haute (1) selon l'une des revendications 1 à 3, dans lequel l'intensité et/ou le spectre du faisceau lumineux secondaire (19) émis par ledit élément (18) sont modulés au cours du temps.

5. Dispositif d'affichage tête-haute (1) selon l'une des revendications 1 à 4, dans lequel ledit élément (18) occupe une position prédéterminée par rapport audit miroir de renvoi (8) de sorte que ladite image (20) de l'élément (18) est visible par l'individu (3) dans une direction privilégiée (21) dans laquelle il voit une partie centrale de ladite image (16) de la scène projetée par le système optique de projection (8, 9).

6. Dispositif d'affichage tête-haute (1) selon l'une des revendications 1 à 5, comportant un système optique (24) interposé entre ledit miroir de renvoi (8) et ledit élément (18) et destiné à former une image intermédiaire (25) dudit élément (18).

7. Dispositif d'affichage tête-haute (1) selon la revendication 6, dans lequel, ledit combineur (9) formant ladite image (16) de la scène à une première distance-image de l'individu (3), ledit système optique (24) présente des propriétés optiques et une position relative par rapport audit élément (18) et audit miroir de renvoi (8) qui sont déterminées de sorte que le combineur (9) forme ladite image (20) de l'élément (18) à une deuxième distance-image de l'individu (3) sensiblement égale à ladite première distance-image.

8. Dispositif d'affichage tête-haute (1) selon l'une des revendications 1 à 7, dans lequel ledit miroir de renvoi (8) présente, pour ledit faisceau lumineux secondaire (19), un coefficient de transmission entre sa deuxième face (11) et sa première face (10) supérieur ou égal à 10 %.

9. Dispositif d'affichage tête-haute (1) selon l'une des revendications 1 à 8, dans lequel ledit combineur (9) présente, pour ledit faisceau lumineux secondaire (19), un coefficient de réflexion supérieur ou égal à 20 %.

10. Dispositif d'affichage tête-haute (1) selon l'une des revendications 1 à 9, dans lequel ladite unité de génération d'images (4) comprend un écran (5) lumineux actif.

11. Véhicule (2) équipé d'un Dispositif d'affichage tête-haute (1) selon l'une des revendications 1 à 10.

## Patentansprüche

1. Head-up-Display-Vorrichtung (1) für ein Fahrzeug (2), beinhaltend:
- eine Bilderzeugungseinheit (4), die ein Primärlichtbündel (7) erzeugt, das eine anzuzeigende Szene repräsentiert, und
- ein optisches Projektionssystem (8, 9) zur Projektion der Szene für eine Person (3), die sich im Inneren des Fahrzeugs (2) befindet, wobei das optische Projektionssystem (8, 9) einen Umlenkspiegel (8) umfasst, der eine erste Seite (10) und eine zweite Seite (11) hat, wobei die erste Seite (10) der Bilderzeugungseinheit (4) zugewandt ist, um das Primärlichtbündel (7) zu einem Combiner (9) zu reflektieren, der geeignet ist, ein Bild (16) der Szene zu bilden, das für die Person (3) sichtbar ist,
**dadurch gekennzeichnet, dass** es mindestens ein Element (18) beinhaltet, das gegenüber der zweiten Seite (11) des Umlenkspiegels (8) liegt und geeignet ist, ein Sekundärlichtbündel (19) in Richtung der zweiten Seite (11) zu emittieren, wobei das Sekundärlichtbündel (19) durch den Umlenkspiegel (8) hindurch zu dem Combiner (9) übertragen wird, der ein Bild (20) des Elements (18) bildet, das für die Person (3) sichtbar ist, und bei der das Element (18) ein leuchtendes Motiv umfasst, das ein Gefahren-, Warn- oder Informationssymbol bildet.

2. Head-up-Display-Vorrichtung (1) nach Anspruch 1, bei der das Element (18) eine elektrolumineszente Lichtquelle umfasst.

3. Head-up-Display-Vorrichtung (1) nach Anspruch 2, bei der die Lichtquelle eine organische Leuchtdiode ist.

4. Head-up-Display-Vorrichtung (1) nach einem der Ansprüche 1 bis 3, bei der die Intensität und/oder das Spektrum des von dem Element (18) emittierten Sekundärlichtbündels (19) im Laufe der Zeit angepasst werden.

5. Head-up-Display-Vorrichtung (1) nach einem der Ansprüche 1 bis 4, bei der das Element (18) eine vorbestimmte Position in Bezug auf den Umlenkspiegel (8) einnimmt, so dass das Bild (20) des Elements (18) für die Person (3) in einer bevorzugten Richtung (21) sichtbar ist, in der sie einen zentralen Teil des Bildes (16) der von dem optischen Projektionssystem (8, 9) projizierten Szene sieht.

6. Head-up-Display-Vorrichtung (1) nach einem der Ansprüche 1 bis 5, beinhaltend ein optisches System (24), das zwischen dem Umlenkspiegel (8) und dem Element (18) angeordnet ist und dazu bestimmt ist, ein Zwischenbild (25) des Elements (18) zu bilden.

7. Head-up-Display-Vorrichtung (1) nach Anspruch 6, bei der, wenn der Combiner (9) das Bild (16) der Szene in einem ersten Bildabstand von der Person (3) bildet, das optische System (24) optische Eigenschaften und eine relative Position in Bezug auf das Element (18) und den Umlenkspiegel (8) aufweist, die so bestimmt werden, dass der Combiner (9) das Bild (20) des Elements (18) in einem zweiten Bildabstand von der Person (3) bildet, der im Wesentlichen gleich dem ersten Bildabstand ist.

8. Head-up-Display-Vorrichtung (1) nach einem der Ansprüche 1 bis 7, bei welcher der Umlenkspiegel (8), für das Sekundärlichtbündel (19), einen Transmissionskoeffizienten zwischen seiner zweiten Seite (11) und seiner ersten Seite (10) größer oder gleich 10 % aufweist.

9. Head-up-Display-Vorrichtung (1) nach einem der Ansprüche 1 bis 8, bei welcher der Combiner (9), für das Sekundärlichtbündel (19), einen Reflexionskoeffizienten größer oder gleich 20 % aufweist.

10. Head-up-Display-Vorrichtung (1) nach einem der Ansprüche 1 bis 9, bei der die Bilderzeugungseinheit (4) einen aktiven leuchtenden Bildschirm (5) umfasst.

11. Fahrzeug (2), das mit einer Head-up-Display-Vorrichtung (1) nach einem der Ansprüche 1 bis 10 ausgestattet ist.

## Claims

1. Head-up display device (1) for a vehicle (2) comprising:
- an image-generating unit (4) that generates a primary light beam (7) representing a scene to be displayed, and
- an optical system (8, 9) for projecting said scene to an individual (3) located inside said vehicle (2), said projecting optical system (8, 9) comprising a steering mirror (8) having a first face (10) and a second face (11), said first face (10) being turned towards said image-generating unit (4) so as to reflect said primary light beam (7) towards a combiner (9) configured to form an image (16) of said scene that is visible to said individual (3),
**characterized in that** it comprises at least one element (18) facing said second face (11) of the steering mirror (8) and configured to emit a secondary light beam (19) in the direction of said second face (11), said secondary light beam (19) being transmitted through said steering mirror (8) towards said combiner (9) forming an image (20) of said element (18) that is visible to said individual (3), and in which said element (18) comprises a luminous pattern forming a signalling, warning or alarm status light.

2. Head-up display device (1) according to Claim 1, wherein said element (18) comprises an electroluminescent light source.

3. Head-up display device (1) according to Claim 2, wherein said light source is an organic light-emitting diode.

4. Head-up display device (1) according to one of Claims 1 to 3, wherein the intensity and/or spectrum of the secondary light beam (19) emitted by said element (18) is modulated over time.

5. Head-up display device (1) according to one of Claims 1 to 4, wherein said element (18) occupies a predetermined position with respect to said steering mirror (8) so that said image (20) of the element (18) is visible to the individual (3) in a privileged direction (21) in which she or he sees a central portion of said image (16) of the scene projected by the projecting optical system (8, 9).

6. Head-up display device (1) according to one of Claims 1 to 5, comprising an optical system (24) interposed between said steering mirror (8) and said element (18) and intended to form an intermediate image (25) of said element (18).

7. Head-up display device (1) according to Claim 6, wherein, said combiner (9) forming said image (16) of the scene at a first image-distance from the individual (3), said optical system (24) has optical properties and a relative position with respect to said element (18) and to said steering mirror (8) that are determined so that the combiner (9) forms said image (20) of the element (18) at a second image-distance from the individual (3) that is substantially equal to said first image-distance.

8. Head-up display device (1) according to one of Claims 1 to 7, wherein said steering mirror (8) has, with respect to said secondary light beam (19), a transmission coefficient, for transmission between its second face (11) and its first face (10), higher than or equal to 10%.

9. Head-up display device (1) according to one of Claims 1 to 8, wherein said combiner (9) has, with respect to said secondary light beam (19), a reflection coefficient higher than or equal to 20%.

10. Head-up display device (1) according to one of Claims 1 to 9, wherein said image-generating unit (4) comprises an active light-emitting screen (5).

11. Vehicle (2) equipped with a head-up display device (1) according to one of Claims 1 to 10.
